# EUROPÄISCHE PATENTSCHRIFT

(11) **EP 1 648 751 B1**
(45) Veröffentlichungstag und Bekanntmachung des Hinweises auf die Patenterteilung: **25.11.2009**
(21) Anmeldenummer: 04740674.9
(22) Anmeldetag: 06.07.2004
(51) Int. Cl.: B60W 30/18, B60W 10/02, B60W 10/10

(54) **VERFAHREN ZUM BETREIBEN EINES KRAFTFAHRZEUGAUTOMATGETRIEBES**
METHOD FOR OPERATING AN AUTOMATIC GEARBOX ON A MOTOR VEHICLE
PROCEDE DE FONCTIONNEMENT D'UNE BOITE DE VITESSES AUTOMATIQUE

(30) Priorität: 31.07.2003 DE 10334930
(43) Veröffentlichungstag der Anmeldung: 26.04.2006
(73) Patentinhaber: ZF FRIEDRICHSHAFEN Aktiengesellschaft, 88038 Friedrichshafen (DE)
(72) Erfinder: WINKEL, Matthias, 88250 Weingarten (DE); WENGERT, Bertram, 88677 Markdorf (DE)
(86) Internationale Anmeldenummer: PCT/EP2004/007345
(87) Internationale Veröffentlichungsnummer: WO 2005/018978

(56) Entgegenhaltungen:
- EP-A- 1 134 111
- US-A- 4 605 112
- US-A- 4 685 062

## Beschreibung

Die Erfindung betrifft ein Verfahren zum Betreiben eines Kraftfahrzeugautomatgetriebes gemäß dem Oberbegriff des Patentanspruchs 1.

Dem Fachmann ist eine Vielzahl von Verfahren zum Betreiben von Automatgetrieben bekannt.

Beispielgebend beschreibt die US 4 605 112 ein stufenloses Getriebe mit einem Umschlingungsorgan und einer elektromagnetischen Kupplung, bei der die Kupplung durch Unterbrechung des elektrischen Stroms zur Kupplung geöffnet wird bei einer abfallenden Motordrehzahl an einem Grenzwert der Motordrehzahl, der etwas höher liegt als diejenige Motordrehzahl, bei der der Motor absterben würde.

Im vorliegenden Fall geht es um Steuerungsprobleme an solchen Getrieben, die insbesondere bei sogenannten Schubrückschaltungen auftreten. Bei derartigen Schubrückschaltungen wird bei sich laufend verringernder Fahrzeuggeschwindigkeit von hohen Getriebegängen automatisch in immer niedrigere Getriebegänge zurückgeschaltet. Dazu werden in an sich bekannter Weise von einen Getriebesteuerungsgerät gesteuerte Aktuatoren betätigt, mit denen Getriebegänge gewählt und geschaltet sowie eine Anfahr- und Trennkupplung am Getriebe betätigt werden kann.

Die genannten Schubrückschaltungen werden beispielsweise bei Bergabfahrten zur Nutzung des Bremsmomentes eines Fahrzeugantriebsmotors durchgeführt, so dass die Betriebsbremse des Fahrzeuges nicht zu stark belastet wird. zudem wird durch eine fahrgeschwindigkeitsgerechte Nachführung von Getriebegängen dafür gesorgt, dass nach Beendigung der Schubbetriebsphase bei geschlossener Kupplung derjenige Getriebegang eingelegt ist, der zur Durchführung einer dann gegebenenfalls folgenden positiven Fahrzeugbeschleunigungsphase benötigt wird.

Zudem tritt im normalen Fahrbetrieb eines Kraftfahrzeuges eine Fahrbetriebsphase auf, in der dieses mit lau fend reduzierter Fahrgeschwindigkeit auf ein Verkehrshindernis, einen kurzzeitig.geschlossenen Bahnübergang oder eine auf Rot gestellte Verkehrsampel zufährt. Während einer solchen Betriebsphase kann es dazu kommen, dass das bei einem geschalteten kleinen Getriebegang erzeugte Motorbremsmoment eine zu große Bremswirkung auf das Fahrzeug ausübt.

Bei vielstufigen automatischen Wechselgetrieben wird daher bei Rückschaltungen im Schubbetrieb häufig nicht jede geschwindigkeitsbezogen durchführbare Rückschaltung im Getriebe auch tatsächlich ausgeführt. Um das genannte hohe Motorschleppmoment bei niedrigen Getriebegängen nicht auf das Fahrzeug wirken zu lassen, werden bei derartigen Getrieben Schubrückschaltungen in kleine Gänge nur bis zum Erreichen einer zuvor festgelegten Fahrzeug-Grenzgeschwindigkeit durchgeführt. Unterhalb dieser Geschwindigkeitsgrenze wird der zuletzt eingelegte (vergleichsweise hohe) Gang beibehalten und die Fahrgeschwindigkeit in diesem Gang bei geschlossener Kupplung weiter reduziert.

Bei Erreichen der Leerlaufdrehzahl des Antriebsmotors wird dann die Kupplung geöffnet, um ein Abwürgen desselben zu verhindern. Das Fahrzeug rollt dabei mit hohem geschalteten Getriebegang sowie offener Kupplung bis zum Fahrzeugstillstand aus und anschließend wird der passende Anfahrgang eingelegt.

Wenn das Fahrzeug jedoch nicht zum Stillstand kommt, weil beispielsweise die Verkehrsampel plötzlich auf Grün umschaltet, wird bei einer dann folgenden Betätigung des Leistungsstellgliedes des Antriebsmotors eine Rückschaltung von dem noch eingelegten hohen Getriebegang in einen solchen durchgeführt, der fahrgeschwindigkeitsbezogen eine Weiterfahrt ermöglicht.

Diese Verfahrensweise zum Betrieb eines Automatgetriebes hat den Nachteil, dass es vergleichsweise lange dauert, bis der bisherige Gang herausgenommen, der neue Gang eingelegt, die Kupplung geschlossen und das Fahrzeug mit der gewünschten Fahrzeugbeschleunigung reagiert.

Vor diesem Hintergrund ist es die Aufgabe an die Erfindung, ein Verfahren zur Steuerung eines Automatgetriebes vorzustellen, durch dessen Betrieb bei Schubrückschaltvorgängen zur unmittelbaren Weiterfahrt stets ein passender Getriebegang im Getriebe geschaltet ist, ohne die Nachteile des hohen Motorbremsmoments bei niedrigen Fahrgeschwindigkeiten und hohen Getriebeübersetzungen in niedrigen Getriebegängen in Kauf nehmen zu müssen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung von einem Verfahren zum Betreiben eines Automatgetriebes in einem Kraftfahrzeug aus, bei dem während einer Schubbetriebsphase bis zum Erreichen einer vorbestimmten Grenzgeschwindigkeit Rückschaltungen im Getriebe durchgeführt und durch Schließen der Kupplung beendet werden. Unterhalb dieser Grenzgeschwindigkeit werden Rückschaltungen dagegen mit offener Kupplung abgeschlossen, so dass fahrgeschwindigkeits- und/oder fahrsituationsbezogen jederzeit derjenige Getriebegang eingelegt ist, mit dem die Weiterfahrt mit einem positiven Antriebsdrehmoment in kürzester Zeit durchgeführt werden kann. Die bei den Rückschaltvorgängen unterhalb der genannten Grenzgeschwindigkeit offene Kupplung gewährleistet zudem, dass trotz eingelegtem niedrigen Getriebegang kein Bremsmoment durch den Antriebsmotor, beispielsweise einer Brennkraftmaschine, erzeugt wird.

Die genannte Grenzgeschwindigkeit ist eine fahrzeugspezifische Größe, die unter anderem von den Übersetzungsverhältnissen der einzelnen Getriebestufen abhängt.

Demnach werden also im Schubbetrieb abweichend vom Stand der Technik auch unterhalb der genannten Grenzgeschwindigkeit weitere Rückschaltungen durchgeführt. Bei diesen sogenannten Komfortrückschaltungen wird aber nach dem Einlegen des neuen Ganges die Kupplung nicht wieder geschlossen, sondern offen gelassen. Dadurch tritt der vom Stand der Technik bekannte negative Effekt der zu starken Motorbremswirkung vorteilhafterweise nicht auf. Die Gangsprünge werden dabei vorzugsweise in Abhängigkeit von der Fahrzeugverzögerung gewählt, die beispielsweise durch Messung der Veränderung der Getriebeausgangswellendrehzahl ermittelt wird.

Will der Fahrer weiterfahren und signalisiert er diesen Wunsch nach einem positiven Antriebsdrehmoment dem Getriebesteuerungsgerät durch ein Auslenken des Leistungsstellgliedes des Fahrzeuges, so wird die Kupplung unverzüglich geschlossen. Da der fahrgeschwindigkeitsbezogen richtige Getriebegang bereits eingelegt ist, erfährt der Fahrer ohne merkbaren Zeitverzug die gewünschte Fahrzeugbeschleunigung.

Um unnötige und den Verschleiß der Getriebebauteile sowie der Kupplung erhöhende Rückschaltungen zu vermeiden, sieht eine bevorzugte Ausgestaltung der Erfindung vor, dass diese Rückschaltungen unterhalb der genannten Grenzgeschwindigkeit nur dann durchgeführt werden, wenn eine Weiterfahrt und damit der Fahrerwunsch nach einem positiven Antriebsdrehmoment für einen vorgegebenen Zeitraum als vergleichsweise wahrscheinlich anzunehmen ist.

In Ausgestaltung dieser Verfahrensweise kann vorgesehen sein, dass zur Ermittlung der Wahrscheinlichkeit des Fahrerwunsches nach einem positiven Antriebsdrehmoment besondere Indikatoren genutzt werden.

Ein solcher Indikator kann beispielsweise ein Sensorsignal sein, mit dem die Betätigung der Betriebsbremse angezeigt wird. Solange der Fahrer die Betriebsbremse betätigt, werden keine Komfortrückschaltungen ausgelöst. Erst wenn der Fahrer die Betriebsbremse löst, also etwa ein Bremspedal des Fahrzeuges entlastet, werden die genannten Komfortrückschaltungen bei ständig geöffneter Kupplung durchgeführt.

Die Beobachtung der Bremsbetätigung ist.dazu besonders geeignet, da der Fahrer zum Betätigen des Leistungsstellgliedes im Normalfall seinen Fuß von dem Bremspedal nimmt. So wird der Fahrer beim Heranrollen an eine Rot anzeigende Verkehrsampel sein Fahrzeug durch Betätigen des Bremspedals abbremsen und bei einem Wechsel auf Grün das Bremspedal der Betriebsbremse entlasten, um eine Weiterfahrt zu ermöglichen.

Wenn der Fahrer dann anschließend das Leistungsstellglied betätigt, so ist zu diesem Zeitpunkt fahrgeschwindigkeits- und/oder fahrsituationsgerecht bereits der richtige Getriebegang eingelegt, um entweder aus dem Stand anzufahren oder um bei vergleichsweise geringer Geschwindigkeit die Fahrt fortzusetzen. Bei Betätigung des Leistungsstellgliedes wird dann nur noch die Kupplung geschlossen und die Weiterfahrt ist unmittelbar möglich.

Gemäß zwei anderer Varianten der Erfindung können als Indikatoren zur Ermittlung des Fahrerwunsches nach einem positiven Antriebsdrehmoment und damit zur Beendigung der Schubbetriebsphase auch Signale genutzt werden, welche die Auslenkung des Betätigungshebels für den Fahrtrichtungsanzeiger und/oder ein Überschreiten des Lenkwinkels der Fahrzeuglenkung gegenüber einem vorbestimmten Lenkwinkel kennzeichnen.

Dem Fachmann ist in Kenntnis der Erfindung leicht verständlich, dass ein vergleichsweise großer Lenkwinkel in Verbindung mit der vorliegenden Fahrzeugverzögerung deutlich auf den Wunsch des Fahrers hinweist, dass nach Beendigung eines Abbiegevorgangs eine zügige Weiterfahrt erfolgen soll.

Etwas weniger aussagekräftig aber dennoch zweckmäßig ist in diesem Zusammenhang die Messung der Stellung des Betätigungshebels für den Fahrtrichtungsanzeiger, da dieser bekanntermaßen auch dann ausgelenkt wird, wenn das Fahrzeug zum Parken am Fahrbahnrand verzögert wird.

Die Treffergenauigkeit bei der Analyse des Fahrerverhaltens im Hinblick auf dessen Antriebsdrehmomentwünsche lässt sich aber deutlich dadurch steigern, indem zwei oder mehrere der genannten oder anderen Indikatoren gemeinsam genutzt werden.

Von besonderem Vorteil bei der Nutzung eines Indikators zur Ermittlung des Fahrerwunsches nach einem positiven Antriebsdrehmoment ist, dass sich dadurch die Schalthäufigkeit bei Schübrückschaltungen verschleißminimierend deutlich reduzieren läst.

Eine weitere Verbesserung des Betriebs eines Automatgetriebes ergibt sich dadurch, dass das Einlegen des Anfahrganges des Automatgetriebes am Ende einer Schubbetriebsphase immer mit einer offenen Kupplung beendet wird, sofern nur noch dieser Getriebegang eine Weiterfahrt ermöglicht.

Für einen Fachmann versteht es sich in Kenntnis der Erfindung von selbst, dass das genannte Steuerungsverfahren vorzugsweise als Software in einem Getriebesteuerungsgerät abgespeichert ist. Dieses Getriebesteuerungsgerät ist dazu wie erwähnt mit Aktuatoren zur Betätigung der Kupplung und zum Auswählen und Einlegen der Getriebegänge über Steuerungsleitungen verbunden. Zudem ist das Getriebesteuerungsgerät signaltechnisch mit Sensoren verbunden, mit denen die Getriebeeingangsdrehzahl, die Getriebeabtriebsdrehzahl, die Betätigung der Betriebsbremse, des Leistungsstellgliedes und des Fahrtrichtungsanzeigehebels sowie der Lenkwinkel des Fahrzeugs feststellbar sind.

## Patentansprüche

1. Verfahren zum Betreiben eines Automatgetriebes in einem Kraftfahrzeug, bei dem während einer Schubbetriebsphase bis zum Erreichen einer vorbestimmten Grenzgeschwindigkeit Rückschaltungen im Getriebe durchgeführt und durch Schließen einer zwischen einem Fahrzeugantriebsmotor und dem Getriebe angeordneten Kupplung beendet werden, **gekennzeichnet durch** dass Verfahrensmerkmal, dass unterhalb der Grenzgeschwindigkeit Rückschaltungen mit offener Kupplung beendet werden.

2. Verfahren nach Anspruch 1, **dadurch gekennzeichnet, dass** die Rückschaltungen bei ständig geöffneter Kupplung nur dann durchgeführt werden, wenn eine vergleichsweise große Wahrscheinlichkeit besteht, dass der Fahrer bald den Wunsch nach einem positiven Antriebsdrehmoment, also nach einer Weiterfahrt hat.

3. Verfahren nach Anspruch 2, **dadurch gekennzeichnet, dass** der Wunsch nach einem positiven Antriebsdrehmoment mittels eines Indikators ermittelt wird.

4. Verfahren nach Anspruch 3, **dadurch gekennzeichnet, dass** als Indikator für den Wunsch nach einem positiven Antriebsdrehmoment das Lösen der Betriebsbremse, das Auslenken eines Betätigungshebels für den Fahrtrichtungsanzeiger sowie der Lenkwinkel der Fahrzeuglenkung genutzt wird.

5. Verfahren nach Anspruch 4, **dadurch gekennzeichnet, dass** das Vorliegen eines Fahrerwunsches nach einem positiven Antriebsdrehmoment durch ein Überschreiten des gemessenen Lenkwinkels gegenüber einem vorbestimmten Lenkwinkel bestimmt wird.

6. Verfahren nach wenigstens einem der vorherigen Ansprüche, **dadurch gekennzeichnet, dass** zur Bestimmung der Wahrscheinlichkeit des Fahrerwunsches nach einem positiven Drehmoment zwei oder mehrere der genannten oder andere Indikatoren gemeinsam genutzt werden.

7. Verfahren nach wenigstens einem der vorherigen Ansprüche, **dadurch gekennzeichnet, dass** Schubrückschaltungen nicht durchgeführt werden, wenn die Betriebsbremse betätigt wird.

8. Verfahren nach wenigstens einem der vorherigen Ansprüche, **dadurch gekennzeichnet, dass** die Kupplung zur Beendigung des Schubbetriebes erst dann geschlossen wird, wenn das Leistungsstellglied des Kraftfahrzeuges betätigt wird.

9. Verfahren nach wenigstens einem der vorherigen Ansprüche, **dadurch gekennzeichnet, dass** das Einlegen des Anfahrgangs des Automatgetriebes am Ende der Schubbetriebsphase immer mit einer offenen Kupplung.beendet wird.

10. Verfahren nach wenigstens einem der vorherigen Ansprüche, **dadurch gekennzeichnet, dass** die Gangsprünge bei der Getrieberückschaltung während der Schubbetriebsphase in Abhängigkeit von der Fahrzeugverzögerung gewählt werden.

11. Verfahren nach wenigstens einem der vorherigen Ansprüche, **dadurch gekennzeichnet, dass** mit diesem ein automatisiertes Handschaltgetriebe betrieben wird.

## Claims

1. Method for operating an automated transmission in a motor vehicle, in which method, during an overrun mode phase until a predefined limit speed has been reached, downshifts are carried out in the transmission and are ended by closing of a clutch which is arranged between a vehicle drive engine and the transmission, **characterized by** the method feature that downshifts are ended with an open clutch below the limit speed.

2. Method according to Claim 1, **characterized in that** the downshifts are carried with a permanently open clutch only when there is a comparatively great probability that the driver will soon request a positive drive torque, that is to say will wish to drive on.

3. Method according to Claim 2, **characterized in that** the request for a positive drive torque is determined by means of an indicator.

4. Method according to Claim 3, **characterized in that** the release of the service brake, the deflection of an actuating lever for the driving-direction indicator and the steering angle of the vehicle steering system are used as indicator for the request for a positive drive torque.

5. Method according to Claim 4, **characterized in that** the presence of a driver's request for a positive drive torque is determined by the measured steering angle exceeding a predefined steering angle.

6. Method according to at least one of the preceding claims, **characterized in that** two or more of the abovementioned or other indicators are used together in order to determine the probability of the driver's request for a positive torque.

7. Method according to at least one of the preceding claims, **characterized in that** overrun downshifts are not carried out if the service brake is actuated.

8. Method according to at least one of the preceding claims, **characterized in that** the clutch is closed to end the overrun mode only when the power actuator of the motor vehicle is activated.

9. Method according to at least one of the preceding claims, **characterized in that** the engagement of the starting gear of the automated transmission at the end of the overrun mode phase is always ended with an open clutch.

10. Method according to at least one of the preceding claims, **characterized in that** the gear increments during the transmission downshift during the overrun mode phase are selected as a function of the vehicle deceleration.

11. Method according to at least one of the preceding claims, **characterized in that** an automated manual transmission is operated by way of the said method.

## Revendications

1. Procédé pour faire fonctionner une boîte de vitesses automatique dans un véhicule automobile, dans lequel, pendant une phase de fonctionnement en mode de poussée, jusqu'à ce qu'une vitesse limite prédéterminée soit atteinte, on effectue des rétrogradages dans la boîte de vitesses, et ils sont terminés par la fermeture d'un embrayage disposé entre un moteur d'entraînement du véhicule et la boîte de vitesses,
**caractérisé par** la caractéristique de procédé selon laquelle l'on termine les rétrogradages avec un embrayage ouvert en dessous de la vitesse limite.

2. Procédé selon la revendication 1, **caractérisé en ce que** les rétrogradages ne sont effectués lorsque l'embrayage est ouvert de manière constante que lorsqu'il existe une relativement grande probabilité que le conducteur va bientôt souhaiter avoir un couple d'entraînement positif, c'est-à-dire de continuer à rouler.

3. Procédé selon la revendication 2, **caractérisé en ce que** le souhait d'un couple d'entraînement positif est détecté au moyen d'un indicateur.

4. Procédé selon la revendication 3, **caractérisé en ce que** l'on utilise comme indicateur du souhait d'un couple d'entraînement positif, le desserrage du frein de service, la déviation d'un levier d'actionnement pour l'indicateur de direction de conduite, ainsi que l'angle de direction de la direction du véhicule.

5. Procédé selon la revendication 4, **caractérisé en ce que** la présence d'un souhait de couple d'entraînement positif du conducteur est déterminée par un dépassement de l'angle de direction mesuré par rapport à un angle de direction prédéterminé.

6. Procédé selon au moins l'une quelconque des revendications précédentes, **caractérisé en ce que** pour déterminer la probabilité du souhait d'un couple positif du conducteur, on utilise en même temps deux ou plusieurs des indicateurs cités ou d'autres indicateurs.

7. Procédé selon au moins l'une quelconque des revendications précédentes, **caractérisé en ce que** des rétrogradages en mode de poussée ne sont pas effectués lorsque le frein de service est actionné.

8. Procédé selon au moins l'une quelconque des revendications précédentes, **caractérisé en ce que** l'embrayage n'est seulement fermé pour terminer le mode de poussée qu'après que l'organe de commande de puissance du véhicule automobile a été actionné.

9. Procédé selon au moins l'une quelconque des revendications précédentes, **caractérisé en ce que** l'enclenchement de la vitesse de démarrage de la boîte de vitesses automatique est toujours terminé avec un embrayage ouvert à la fin de la phase de fonctionnement en mode de poussée.

10. Procédé selon au moins l'une quelconque des revendications précédentes, **caractérisé en ce que** les sauts de vitesse lors du rétrogradage de vitesses sont sélectionnés pendant la phase de fonctionnement en mode de poussée en fonction de la décélération du véhicule.

11. Procédé selon au moins l'une quelconque des revendications précédentes, **caractérisé en ce qu'**il permet de faire fonctionner une boîte de vitesses automatisée à changement de vitesse manuel.
